Europäisches Patentamt

European Patent Office

Office européen des brevets

(11) Veröffentlichungsnummer: **0 391 141**

**A2**

(12) **EUROPÄISCHE PATENTANMELDUNG**

(21) Anmeldenummer: **90105334.8**

(22) Anmeldetag: **21.03.90**

(51) Int. Cl.5: **G02F 1/137, G02F 1/1337**

(30) Priorität: **07.04.89 DE 3911358**

(43) Veröffentlichungstag der Anmeldung:
**10.10.90 Patentblatt  90/41**

(84) Benannte Vertragsstaaten:
**DE FR GB IT NL**

(71) Anmelder: **Nokia Unterhaltungselektronik (Deutschland) GmbH**
**Östliche Karl-Friedrich-Strasse 132**
**D-7530 Pforzheim(DE)**

(72) Erfinder: **Barnaba, Martin**
**Enzstrasse 41**
**D-7000 Stuttgart-50(DE)**

(54) **Flüssigkristallzelle mit hohem Twist.**

(57) Eine Flüssigkristallzelle (1) mit hohem Twist weist eine erst Substratplatte (2.o) mit einer Orientierungsschicht (7.o) für geringen Pre-Tilt sowie eine zweite Substratplatte (2.u) mit einer zweiten Orientierungsschicht (7.u) für hohen Pre-Tilt auf.

Der Vorteil dieser Ausgestaltung besteht darin, daß Orientierungsschichten für niederen Pre-Tilt billig sind und sehr einfach auf Substratplatten aufgebracht werden können. Materialien für hohen Pre-Tilt sind dagegen erheblich teurer und die Aufbringverfahren sind aufwendiger. Dadurch, daß eine der Orientierungsschichten einen hohen Pre-Tilt erzeugt, lassen sich hohe Twistwinkel stabilisieren. Dennoch ist die Zelle verhältnismäßig einfach herstellbar und billig, da nur eine einzige Orientierungsschicht mit hohem Pre-Tilt verwendet wird statt zweier solcher Schichten, wie sie bei herkömmlichen Zellen eingesetzt werden.

EP 0 391 141 A2

**Flüssigkristallzelle mit hohem Twist**

## TECHNISCHES GEBIET

Die Erfindung betrifft eine Flüssigkristallzelle mit hohem Twist, d. h. eine Flüssigkristallzelle, bei der der Twist größer als 180° ist, in der Regel 240° und mehr. Es wird darauf hingewiesen, daß im folgenden der Einfachheit halber statt des Begriffs Flüssigkristallzelle stets der abgekürzte Begriff Zelle verwendet wird.

## STAND DER TECHNIK

Zellen mit Twist, sei dieser nun niedrig oder hoch, weisen grundsätzlich Orientierungsschichten auf ihren Substratplatten auf. In den meisten Flüssigkristallmischungen sind nur solche Flüssigkristallmoleküle enthalten, die sich parallel zu einer durch die Orientierungsschicht vorgegebenen Richtung stellen. Die Richtung wird bei aufgedampften anorganischen Orientierungsschichten durch die Aufdampfrichtung und bei organischen Orientierungsschichten durch diejenige Richtung festgelegt, unter der die Schichten gerieben werden. Für das Weitere ist es unerheblich, ob Flüssigkristalle Verwendung finden, die sich parallel zur vorgegebenen Richtung stellen oder zu dieser einen bestimmten Winkel, den sogenannten Tilt, einhalten. Wesentlich ist jedoch das Einhalten eines anderen Winkels, des sogenannten Pre-Tilts. Es handelt sich hierbei um denjenigen Winkel, um den die Flüssigkristallmoleküle gegenüber der Ebene einer Substratplatte geneigt sind. Dieser Pre-Tilt wird durch das Material und die Behandlungsart der Orientierungsschicht bestimmt.

Der Pre-Tilt dient dazu, den durch die Zellenkonstruktion vorgegebenen Twist zu stabilisieren. Je höher der Twist, desto höher muß der stabilisierende Pre-Tilt sein. Für Zellen mit 180° Twist genügt ein Pre-Tilt von einigen wenigen Grad, z. B. 3°. Ein solcher Pre-Tilt läßt sich mit den gängigen Polyimid-Orientierungsschichten leicht erzielen. Für Zellen mit 240° Twist ist ein Pre-Tilt von etwa 7° erforderlich, für solche mit 270° Twist ein Pre-Tilt von etwa 16°. Ein Pre-Tilt von etwa 7° ist mit besonderen Polyimiden bei Aufwendung ganz besonderer Sorgfalt noch erzielbar. Höhere Pre-Tilts sind z. B. mit Polyphenylen oder schräg aufgedampftem SiO einstellbar.

Materialien und Aufbringverfahren für Pre-Tilt-Winkel über etwa 7° sind erheblich teurer als Materialien und Aufbringverfahren für geringere Pre-Tilt-Winkel.

Man bemüht sich daher seit längerem darum, Materialien und Verfahren zu finden, mit denen auch Flüssigkristallzellen mit hohem Twist und damit relativ hohem erforderlichem Pre-Tilt verhältnismäßig einfach und billig herstellbar sind.

## DARSTELLUNG DER ERFINDUNG

Die erfindungsgemäße Flüssigkristallzelle mit hohem Twist zeichnet sich dadurch aus, daß auf den beiden Substratplatten Orientierungsschichten aus unterschiedlichen Materialien verwendet werden, und zwar auf der einen Substratplatte eine Orientierungsschicht aus einem möglichst einfach aufbringbaren und billigen Material, und auf der anderen eine Orientierungsschicht aus einem Material, das einen möglichst hohen Pre-Tilt erzeugt. Dadurch, daß nur auf eine der beiden Substratplatten eine Orientierungsschicht für hohen Pre-Tilt aufgebracht wird, erniedrigen sich die Kosten für eine Zelle gegenüber denjenigen, die bisher erforderlich waren, da bei herkömmlichen Zellen immer auf beiden Platten dasselbe Material für die Orientierungsschicht verwendet wurde.

Vorzugsweise wird als billiges und einfach aufbringbares Material Lowtilt-Polyimid verwendet. Die andere Orientierungsschicht für hohen Pretilt besteht dagegen aus Highpretilt-Polyimid oder aus Polyphenylen. Die Lowtilt-Polyimid-Schicht ist einfacher aufbringbar als dies für Schichten aus Hochtiltmaterialien gilt, da Lowtilt-Polyimid bei erheblich geringeren Temperaturen aushärtet als die anderen Materialien, nämlich bei etwa 250° C statt etwa bei 400° C. Die Einfachheit besteht hier also in der einfacheren Ausführbarkeit des Temperprozesses. Die zweite Orientierungsschicht für hohen Pre-Tilt kann aber auch eine Schicht aus einem schräg aufgedampften Material sein. Hier ist offensichtlich, daß das Aufbringen eines organischen Materials, z. B. durch ein übliches Spin-Coat-Verfahren, erheblich einfacher ist als Aufdampfen im Vakuum.

Mit einer so aufgebauten Zelle mit hohem Twist ist es möglich, auch organische Farbschichten einsetzen zu können. Dies war bisher nicht möglich, da die üblichen Farbschichtmaterialien die Herstellvorgänge nicht überstehen, die zum Aufbringen von Orientierungsschichten für hohen Pre-Tilt erforderlich sind. Solche Farbschichten können nun auf der Substratplatte mit der Orientierungsschicht für niedrigen Pre-Tilt vorhanden sein. Die Orientierungsschicht auf der anderen Substratplatte sorgt dann dafür, daß trotz des niedrigen Pre-Tilts auf der Platte mit den Farbschichten insgesamt eine Zelle mit hohem Twist erzielt werden kann.

ZEICHNUNG

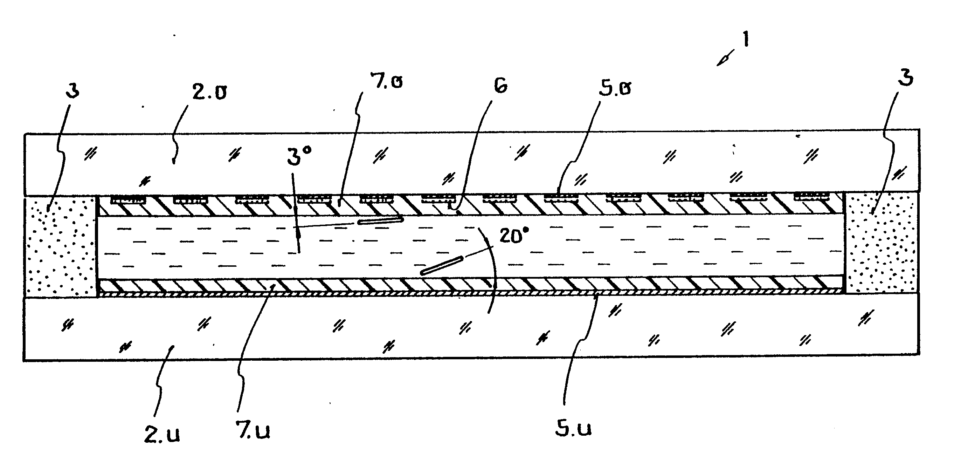

Die einzige Figur stellt einen schematischen Schnitt durch eine Zelle mit Farbschichten und einer Orientierungsschicht für niedrigen Pre-Tilt auf einer ersten Substratplatte und einer Orientierungsschicht für hohen Pre-Tilt auf der anderen Substratplatte dar.

BESCHREIBUNG VON AUSFÜHRUNGSBEISPIELEN

Die Figur zeigt eine (Flüssigkristall-) Zelle 1 mit einer oberen Substratplatte 2.o und einer unteren Substratplatte 2.u, die längs ihrer Ränder über eine Klebenaht 3 dicht miteinander verbunden sind. Der von den Substratplatten und der Klebenaht eingeschlossene Innenraum ist mit einer Flüssigkristallmischung 4 befüllt.

Die obere Substratplatte 2.o trägt eine Vielzahl von Leiterbahnen 5.o, die mit durchsichtigen Farbstoffpunkten 6 in den drei Primärfarben bedeckt sind. Derartige Substratplatten für Farbdisplays sind z. B. von der japanischen Firma Sanritsu erhältlich. Auf der unteren Substratplatte 2.u verlaufen Leiterbahnen 5.u rechtwinklig zu den oberen Leiterbahnen 5.o. Dies ermöglicht es, einzelne Kreuzungspunkte zwischen Leiterbahnen gezielt anzusteuern, um dadurch z. B. im Durchlicht einzelne leuchtende Farbpunkte zu erzielen.

Auf beiden Substratplatten ist außer den bisher genannten Schichten jeweils noch eine Orientierungsschicht vorhanden. Die Orientierungsschicht 7.o auf der oberen Substratplatte 2.o mit den Farbstoffpunkten 6 besteht aus Lowtilt-Polyimid, während die untere Orientierungsschicht 7.u auf der unteren Substratplatte 2.u aus Polyphenylen besteht. Beide Schichten werden jeweils durch ein Spin-Coat-Verfahren aufgebracht. Für das Lowtilt-Polyimid wurde dabei das Material Liquicoat-Imid Kit der Firma Merck verwendet. Das Polyphenylen für die untere Orientierungsschicht 7.u wurde von der Firma ICI bezogen. Nach dem jeweiligen Aufbringen durch den Spin-Coat-Prozeß werden die Schichten getrocknet und getempert, was für das Polyimid an Luft bei etwa 300 °C und für das Polyphenylen in Stickstoff bei etwa 400 °C erfolgt. Beide Schichten werden dann in üblicher Weise gerieben, wozu beim Ausführungsbeispiel eine Samtwalze eingesetzt wurde.

Die aus Polyimid bestehende obere Orientierungsschicht 7.o erzeugte bei Verwendung der SBE-Flüssigkristallmischung 3021 von Merck einen Pre-Tilt von 3°. Die aus Polyphenylen bestehende untere Orientierungsschicht 7.u erzeugte dagegen einen Pre-Tilt von 20°. Diese Pre-Tilt-Winkel gemeinsam reichen aus, einen Twist von 240° sicher zu stabilisieren.

Das Ausführungsbeispiel betrifft eine Zelle mit Farbstoffpunkten aus organischem Material. Eine solche Zelle wurde als Ausführungsbeispiel gewählt, da bei ihr das Verwenden unterschiedlicher Orientierungsschichten von doppeltem Vorteil ist. Der eine Vorteil besteht darin, daß die eine Orientierungsschicht sehr einfach und billig aufbringbar ist. Der andere Vorteil besteht darin, daß für die Zelle mit hohem Twist ein organischer Farbstoff verwendet werden kann. Organische Farbstoffe sind brillanter als Pigmente. Organische Farbstoffe konnten bisher aber in Zellen mit hohem Twist nicht oder nur unter Durchführen sehr komplizierter Herstellverfahren eingesetzt werden, da Orientierungsschichten für hohen Pre-Tilt, der zum Stabilisieren eines hohen Twists erforderlich ist, das Ausführen von Verfahrensschritten bei Temperaturen erfordern, denen die üblichen organischen Farbstoffe nicht standhalten.

Der als erster genannte Vorteil, also derjenige der billigen Herstellbarkeit, ist bei allen Zellen mit hohem Twist erzielbar, also nicht nur solchen mit Farbstoffpunkten. Dies, weil immer nur eine Orientierungsschicht hohen Pre-Tilt aufweist und damit aufwendiger in der Herstellung ist. So sind Hochtiltmaterialien erheblich teurer als Lowtilt-Polyimid und sie sind bei höheren Temperaturen zu tempern als letzteres. Werden zum Erzielen einer Orientierungsschicht mit hohem Pre-Tilt schräg aufgedampfte Schichten aus z. B. SiO verwendet, ist zwar das Ausgangsmaterial relativ billig, jedoch ist der Herstellvorgang außerordentlich aufwendig und damit teuer und störanfällig. Man wird daher auch für die Orientierungsschicht für hohen Pre-Tilt vorzugsweise organische Materialien verwenden und nur dann zu schräg aufgedampften anorganischen Materialien greifen, wenn sehr hohe Pre-Tilt-Winkel erforderlich sind, um sehr hohe Twistwinkel zu stabilisieren.

**Ansprüche**

1. Flüssigkristallzelle mit hohem Twist, mit
- einer ersten Substratplatte (2.o), die eine erste Orientierungsschicht (7.o) aufweist, und
- einer zweiten Substratplatte (2.u), die eine zweite Orientierungsschicht (7.u) aufweist,
**dadurch gekennzeichnet,** daß
- das Material der ersten Orientierungsschicht ein solches ist, das möglichst billig und einfach aufbringbar ist, und das Material der zweiten Orientierungsschicht ein solches ist, das einen möglichst hohen Pre-Tilt erzeugt.

2. Flüssigkristallzelle nach Anspruch 1, **dadurch gekennzeichnet,** daß das erste Material ein organisches Material ist, das bei möglichst geringer Temperatur aushärtet.

3. Flüssigkristallzelle nach Anspruch 2, **dadurch gekennzeichnet,** daß die erste Orientierungsschicht (7.o) eine Polyimid-Schicht ist.

4. Flüssigkristallzelle nach Anspruch 1, **dadurch gekennzeichnet,** daß die zweite Orientierungsschicht (7.u) eine Polyphenylen-Schicht ist.

5. Flüssigkristallzelle nach Anspruch 1, **dadurch gekennzeichnet,** daß die zweite Orientierungsschicht (7.u) eine schräg aufgedampfte Schicht aus einem anorganischen Material ist.

6. Flüssigkristallzelle nach Anspruch 1, **dadurch gekennzeichnet,** daß die erste Substratplatte (2.o) Farbschichten (6) aufweist.

EP 0 391 141 A2

M. Barnaba-4
05.04.1989

1

3    2.o    7.o    6    5.o    3

3°    20°

2.u    7.u    5.u